# EUROPÄISCHE PATENTSCHRIFT

(11) **EP 3 078 766 B1**
(45) Veröffentlichungstag und Bekanntmachung des Hinweises auf die Patenterteilung: **13.06.2018**
(21) Anmeldenummer: 16163512.3
(22) Anmeldetag: 01.04.2016
(51) Int. Cl.: C25B 15/02, C25B 1/10, C25B 9/14, C25B 15/08

(54) **VORRICHTUNG, SYSTEM UND VERFAHREN ZUM GEWINNEN VON WASSERSTOFF AUS WASSER UNTER VERWENDUNG EINES ARBEITSSTOFFS**
DEVICE, SYSTEM AND METHOD FOR RECOVERING HYDROGEN FROM WATER USING A WORK SUBSTANCE
DISPOSITIF, SYSTEME ET PROCEDE DE PRODUCTION D'HYDROGENE A PARTIR D'EAU A L'AIDE D'UN COMPOSE

(30) Priorität: 09.04.2015 DE 102015206288
(43) Veröffentlichungstag der Anmeldung: 12.10.2016
(73) Patentinhaber: ROBERT BOSCH GMBH, 70442 Stuttgart (DE)
(72) Erfinder: Graf, Olivier, 74072 Heilbronn (DE)

(56) Entgegenhaltungen:
- US-A- 4 274 938
- US-A1- 2013 026 032
- US-A1- 2014 318 979

## Beschreibung

Die vorliegende Erfindung betrifft eine Vorrichtung, ein System und ein Verfahren zum Gewinnen von Wasserstoff aus Wasser unter Verwendung eines Arbeitsstoffs. Unter einem Arbeitsstoff ist insbesondere ein Stoff zu verstehen, der weder Ausgangs- noch Endprodukt ist und welcher vorzugsweise in einem geschlossenen Kreislauf zirkuliert, ähnlich beispielsweise einem Arbeitsfluid in einer Wärme- oder Kältemaschine.

### Stand der Technik

Die Suche nach umweltfreundlichen und erneuerbaren Energiespeichern zum Betreiben von Fahrzeugen wird mit beträchtlichem Aufwand verfolgt. Eine Option für einen umweltfreundlichen Energiespeicher ist Wasserstoff, welcher etwa in einer Brennstoffzelle mit Sauerstoff zusammengeführt werden kann, wobei Energie und Wasser freigesetzt werden. Es besteht aber noch ein Bedarf an umweltfreundlichen Verfahren, um Wasserstoff im großen Maßstab herzustellen.

Wasserstoff ist beispielsweise mittels Elektrolyse herstellbar. In der WO 2011/141221 A1 ist ein Verfahren zur Erzeugung von Wasserstoff aus Wasser mittels eines Hochtemperatur-Elektrolyseurs beschrieben, wobei Wasser auf eine Prozesstemperatur von 500 °C aufgeheizt wird.

Sowohl der Wirkungsgrad als auch die Umweltfreundlichkeit der Wasserstofferzeugung mittels Elektrolyse hängt jedoch stark von der Umweltfreundlichkeit und dem Wirkungsgrad des verwendeten Verfahrens zum Erzeugen des für die Elektrolyse benötigten elektrischen Stroms ab.

In der US 2013/026032 A1 ist ein reversibles elektrochemisches System zum Konvertieren von Teilen eines kohlstenstoffhaltigen Abfallstroms in Wasserstoff beschrieben.

Die US 4 274 938 A beschreibt eine Vorrichtung zum Produzieren von Wasserstoff und von Sauerstoff oder Oxiden beschrieben.

In der US 2014/318979 A1 sind eine Vorrichtung und ein Verfahren für das elektrochemische Erzeugen von Wasserstoff und/oder Sauerstoff beschrieben.

### Offenbarung der Erfindung

Die vorliegende Erfindung offenbart eine Vorrichtung mit den Merkmalen des Patentanspruchs 1, ein System mit den Merkmalen des Patentanspruchs 9 und ein Verfahren mit den Merkmalen des Patentanspruchs 13.

Demgemäß ist eine Vorrichtung zum Gewinnen von Wasserstoff aus Wasser unter Verwendung eines Arbeitsstoffs vorgesehen, mit: einer ersten Kammer, in welche ein flüssiger oxidierbarer Arbeitsstoff einleitbar oder vorhanden ist; einer zweiten Kammer, in welche Wasser einleitbar ist, welches in der zweiten Kammer in Wasserstoff und Sauerstoff spaltbar ist; einer Trennungseinrichtung, welche dazu ausgebildet und angeordnet ist, die erste Kammer von der zweiten Kammer zu trennen; wobei die Trennungseinrichtung für Sauerstoffionen durchlässig und für Wasser undurchlässig ist; einer, vorzugsweise in oder an der ersten Kammer ausgebildeten, ersten Elektrodeneinrichtung; einer, vorzugsweise in oder an der zweiten Kammer ausgebildeten, zweiten Elektrodeneinrichtung; wobei die erste Elektrodeneinrichtung zum Leiten der abgegebenen Elektronen aus dem Arbeitsstoff an die zweite Elektrodeneinrichtung mit dem in die erste Kammer eingeleiteten Arbeitsstoff elektrisch leitend verbindbar ist, sodass der Arbeitsstoff in der ersten Kammer als flüssige Elektrode fungiert; wobei mittels der zweiten Elektrodeneinrichtung mit den an die zweite Elektrodeneinrichtung geleiteten Elektronen Sauerstoff zu den Sauerstoffionen ionisierbar ist; sodass der Arbeitsstoff in der ersten Kammer durch die Sauerstoffionen unter Abgabe von Elektronen zumindest teilweise oxidierbar ist, wodurch ein oxidierter Arbeitsstoff entsteht; und mit einer Ausleiteinrichtung, mittels welcher der Wasserstoff aus der zweiten Kammer ausleitbar ist.

Der Arbeitsstoff ist ein oxidierbares Metall oder eine Legierung oxidierbarer Metalle, welcher für Elektronen leitfähig ist. Besonders bevorzugt sind solche Materialien als Arbeitsstoff, deren Schmelzpunkt unter 1000 °C liegt.

Weiterhin ist vorgesehen ein System zum Gewinnen von Wasserstoff aus Wasser mit einer erfindungsgemäßen Vorrichtung und mit einem Arbeitsstoff-Kreislauf, mittels welchem der oxidierte Arbeitsstoff zumindest zum Teil wieder in den unoxidierten Arbeitsstoff umwandelbar ist.

Weiterhin ist vorgesehen ein Verfahren zum Gewinnen von Wasserstoff aus Wasser, mit den Schritten: Einleiten eines flüssigen oxidierbaren Arbeitsstoffs in eine erste Kammer; Einleiten von Wasser in eine zweite Kammer; wobei die erste Kammer von der zweiten Kammer durch eine Trennungseinrichtung getrennt ist, welche für Sauerstoffionen durchlässig und für Wasser undurchlässig ist; wobei der Arbeitsstoff derart gewählt wird und/oder das Wasser und/oder der Arbeitsstoff derart in die erste Kammer eingeleitet wird und/oder Parameter der ersten Kammer und/oder Parameter der zweiten Kammer derart eingestellt werden, dass a) das Wasser in der zweiten Kammer zumindest teilweise in Wasserstoff und Sauerstoff aufgespalten wird; b) der Sauerstoff durch an eine, vorzugsweise in oder an der zweiten Kammer ausgebildete, zweite Elektrodeneinrichtung geleitete Elektronen zumindest teilweise zu Sauerstoffionen ionisiert wird; c) der Arbeitsstoff in der ersten Kammer, zumindest teilweise, durch die Sauerstoffionen, welche aus der Trennungseinrichtung in die erste Kammer gelangen, oxidiert wird; wobei bei dem Oxidieren des Arbeitsstoffs Elektronen abgegeben werden, welche über den Arbeitsstoff und über eine erste Elektrodeneinrichtung an die zweite Elektrodeneinrichtung geleitet werden; und Ausleiten des Wasserstoffs aus der zweiten Kammer.

Die Sauerstoffionen können insbesondere in der zweiten Kammer, in der zweiten Elektrodeneinrichtung und/oder in einem Grenzbereich an einer Grenzfläche zwischen der zweiten Elektrodeneinrichtung und der Trennungseinrichtung und/oder in der Trennungseinrichtung ihren Ursprung haben und daraufhin von der Trennungseinrichtung aus in die erste Kammer gelangen.

### Vorteile der Erfindung

In dem erfindungsgemäßen Verfahren wird Wasser durch eine chemische Teilreaktion in Wasserstoff und Sauerstoff gespalten. Der Wasserstoff kann direkt entnommen werden, wenn der Sauerstoff mit dem Arbeitsstoff, einem Metall, zu einem Metalloxid reagiert. Das Metalloxid, kann, etwa in dem erfindungsgemäßen System, anschließend mittels Thermolyse in Sauerstoff und das entsprechende Metall zersetzt werden, wobei der Sauerstoff von dem Metall getrennt und abgeführt wird. Das auf diese Weise regenerierte Metall kann erneut als Arbeitsstoff in der erfindungsgemäßen Vorrichtung zur Reaktion mit Wasser gebracht werden. Im Gegensatz zu Wassermolekülen beginnen mehrere Metalloxide sich bereits bei Temperaturen von weiter unter 1000 °C zu zersetzen. Dadurch sind notwendige Prozesstemperaturen deutlich niedriger als bei einer direkten Zersetzung von Wassermolekülen mittels einer direkten Thermolyse. Temperaturen bis 1000 °C lassen sich heute bereits regenerativ, beispielsweise mittels konzentrierter Sonnenstrahlung erzeugen. Besonders vorteilhaft sind das erfindungsgemäße Verfahren und System sowie die erfindungsgemäße Vorrichtung somit zum Betrieb mit unter 1000 °C ausgelegt.

Vorzugsweise kann Sauerstoff, beispielsweise enthalten in Molekülen wie etwa Wassermolekülen, an einer ersten Stelle der Vorrichtung in die erfindungsgemäße Vorrichtung eingeleitet werden bzw. einleitbar sein und an einer andere Stelle der Vorrichtung wieder aus der Vorrichtung ausgeleitet werden bzw. ausleitbar sein.

Vorzugsweise kann die erfindungsgemäße Vorrichtung somit auch eine Einrichtung zum Generieren von Wärme mittels konzentrierter Sonnenstrahlung umfassen. Insbesondere kann die erfindungsgemäße Vorrichtung in einer Parabolrinne oder einem Solarturm eines Parabolrinnen- bzw. Solarturmkraftwerks ausgebildet sein oder eine Parabolrinne oder einen Solarturm umfassen. Bei Solartürmen richten sich mehrere automatisch positionierende Spiegel (Heliostate) so aus, dass das Sonnenlicht auf einen zentralen Absorber (Receiver), meist in der Spitze des Solarturms, konzentriert wird.

Weiterhin vorzugsweise kann der Arbeitsstoff sowohl thermisch als auch elektrisch regenerierbar sein bzw. regeneriert werden.

In der elektrochemischen Spannungsreihe hat Sauerstoff gegenüber Wasserstoff unter Normalbedingungen ein Standardpotential von 1,23 Volt. Um Wasser zu spalten, sind also mindestens 1,23 Volt notwendig, zuzüglich einiger 100 Millivolt Überspannung für die Aktivierungsenergie. Zur Spaltung von Wasser durch Bildung eines Metalloxids wird als Arbeitsstoff vorzugsweise ein Metall gewählt, dessen Standardpotential gegenüber Wasser sich mindestens um 1,5 Volt oder mehr unterscheidet.

Im Folgenden wird die Funktion der erfindungsgemäßen Vorrichtung basierend auf Kalium als Arbeitsstoff beschrieben, was aber nicht einschränkend zu verstehen sein soll. Kalium hat gegenüber Wasserstoff ein Standardpotential von -2,92 Volt. Der Schmelzpunkt von Kalium liegt bei ca. 63°C und kann, beispielsweise durch Bildung einer eutektischen Legierung bestehend aus zum Beispiel 78 % Kalium und 22 % Natrium, bei welcher der Schmelzpunkt bei ca. - 11°C liegt, weiter herabgesetzt werden. Mit 2,41 % Massenanteil an der Erdkruste ist Kalium kein seltener Rohstoff. Eine Zersetzung von Kaliumoxid in Kalium und Sauerstoff beginnt bereits bei ca. 350°C.

Würde man Kalium und Wasser direkt zur Reaktion bringen, würde in einer starken exothermen Reaktion Kaliumhydroxid und Wasserstoff, KOH + H2 entstehen, wobei das in dem Kaliumhydroxid enthaltene Kalium regeneriert werden müsste. Erfindungsgemäß wird das Wasser von dem Arbeitsstoff, hier Kalium, durch die Trennungseinrichtung räumlich getrennt, so dass das Kalium ausschließlich nur mit dem in den Wassermolekülen des Wassers enthaltenen Sauerstoff reagieren kann.

Vorteilhafte Ausführungsformen und Weiterbildungen ergeben sich aus den Unteransprüchen sowie aus der Beschreibung unter Bezugnahme auf die Figuren.

Gemäß einer Ausführungsform ist die zweite Elektrodeneinrichtung als für Sauerstoff, optional auch für Wasser, durchlässige Schicht zwischen der zweiten Kammer und der Trennungseinrichtung ausgebildet.

Gemäß einer weiteren Ausführungsform ist die erste Elektrodeneinrichtung als eine für den Arbeitsstoff in flüssigem Zustand passierbare, vorzugsweise inerte, Elektrode ausgebildet. Insbesondere kann die Elektrodeneinrichtung gelocht sein und/oder eine Kamm- oder Gitterstruktur aufweisen, sodass für den Arbeitsstoff in flüssigem Zustand passierbare Durchgänge in der Elektrodeneinrichtung ausgebildet sind.

Gemäß einer weiteren Ausführungsform ist die erste Kammer ganz oder teilweise zwischen der Trennungseinrichtung und der ersten Elektrodeneinrichtung angeordnet.

Gemäß einer weiteren Ausführungsform besteht die Trennungseinrichtung aus einem Feststoffelektrolyten oder weist einen Feststoffelektrolyten auf. Bei dem Feststoffelektrolyten kann es sich beispielsweise um Zirkoniumdioxid handeln. Die Trennungseinrichtung, insbesondere der Elektrolyt oder Feststoffelektrolyt, ist lediglich für negativ geladene Sauerstoffionen leitfähig, für Elektronen aber nicht leitfähig. Dazu kann die Trennungseinrichtung vorteilhaft auf eine vorbestimmte Betriebstemperatur bringbar sein bzw. gebracht werden.

Gemäß einer weiteren Ausführungsform umfasst die Vorrichtung eine erste Membran, welche zumindest als Teil einer Außenseite der ersten Kammer ausgebildet ist und welche für Sauerstoffmoleküle durchlässig und für Moleküle des Arbeitsstoffs undurchlässig ist. Bevorzugt ist die zweite Membran für Wärme durchlässig, das heißt, es handelt sich bei der zweiten Membran nicht um einen Wärme-Isolator.

Gemäß einer weiteren Ausführungsform umfasst die Vorrichtung eine zweite Membran, welche zumindest als Teil einer Außenseite der zweiten Kammer ausgebildet ist und welche für Wasserstoffmoleküle durchlässig und für Wasser undurchlässig ist.

Gemäß einer weiteren Ausführungsform umfasst die Vorrichtung eine Spannungsquelle, mittels welcher eine elektrische Potenzialdifferenz zwischen der ersten Elektrodeneinrichtung und der zweiten Elektrodeneinrichtung einstellbar ist. Somit kann eine chemische Reaktion ermöglicht werden, selbst wenn diese nicht aufgrund der natürlichen Potenzialdifferenz zwischen Wasser und dem Arbeitsstoff von selbst eintreten würde.

Gemäß einer weiteren Ausführungsform umfasst das erfindungsgemäße System eine Verdampfungseinrichtung, mittels welcher durch eine in dem Arbeitsstoff enthaltene Wärme flüssiges Wasser zu Wasserdampf verdampfbar ist. Der derart erzeugte Wasserdampf ist vorzugsweise in die zweite Kammer der erfindungsgemäßen Vorrichtung einleitbar.

Gemäß einer weiteren Ausführungsform umfasst das System einen Gegenstromrekuperator, mittels welchem Wasserdampf durch eine in dem Arbeitsstoff enthaltene Wärme überhitzbar ist. Der überhitzte Wasserdampf ist vorzugsweise in die zweite Kammer der erfindungsgemäßen Vorrichtung einleitbar.

Gemäß einer weiteren Ausführungsform umfasst das System eine Heizeinrichtung, mittels welcher der Arbeitsstoff durch konzentrierte Sonnenstrahlen erhitzbar ist. Die Heizeinrichtung kann beispielsweise Teil einer solarstrahlenkonzentrierenden Anordnung sein, etwa eines Solarturms.

Gemäß einer weiteren Ausführungsform umfasst das erfindungsgemäße Verfahren den Schritt: Erhitzen des oxidierten Arbeitsstoffs zum zumindest teilweisen Umwandeln des oxidierten Arbeitsstoffs in den unoxidierten Arbeitsstoff.

Gemäß einer weiteren Ausführungsform wird als Arbeitsstoff ein Alkalimetall, ein Erdalkalimetall oder Quecksilber verwendet. Besonders bevorzugt ist die Verwendung von Kalium, Natrium oder einer Legierung, insbesondere einer eutektischen Legierung, aus Kalium und Natrium. Das Verwenden eines Eutektikums bietet den Vorteil, dass auch bei einer ausgeschalteten Vorrichtung ein Risiko des Platzens von Rohren aufgrund eines Erstarrens des Arbeitsstoffs minimiert oder ausgeschaltet wird.

### Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:
- Fig. 1: ein schematisches Blockdiagramm einer Vorrichtung zum Gewinnen von Wasserstoff aus Wasser unter Verwendung eines Arbeitsstoffs, gemäß einer Ausführungsform der vorliegenden Erfindung;
- Fig. 2: eine schematische Darstellung einer Vorrichtung zum Gewinnen von Wasserstoff aus Wasser unter Verwendung eines Arbeitsstoffs gemäß einer weiteren Ausführungsform der vorliegenden Erfindung;
- Fig. 3: eine schematische Darstellung eines Systems zum Gewinnen von Wasserstoff aus Wasser unter Verwendung eines Arbeitsstoffs gemäß einer weiteren Ausführungsform der vorliegenden Erfindung;
- Fig. 4: eine schematische Darstellung einer Vorrichtung zum Gewinnen von Wasserstoff aus Wasser unter Verwendung eines Arbeitsstoffs gemäß einer weiteren Ausführungsform der vorliegenden Erfindung;
- Fig. 5: eine schematische Darstellung einer Vorrichtung zum Gewinnen von Wasserstoff aus Wasser unter Verwendung eines Arbeitsstoffs gemäß einer weiteren Ausführungsform der vorliegenden Erfindung;
- Fig. 6: eine schematische Darstellung eines Systems zum Gewinnen von Wasserstoff aus Wasser unter Verwendung eines Arbeitsstoffs gemäß einer weiteren Ausführungsform der vorliegenden Erfindung; und
- Fig. 7: ein schematisches Flussdiagramm zum Erläutern eines Verfahrens zum Gewinnen von Wasserstoff aus Wasser unter Verwendung eines Arbeitsstoffs gemäß einer weiteren Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

### Beschreibung der Ausführungsbeispiele

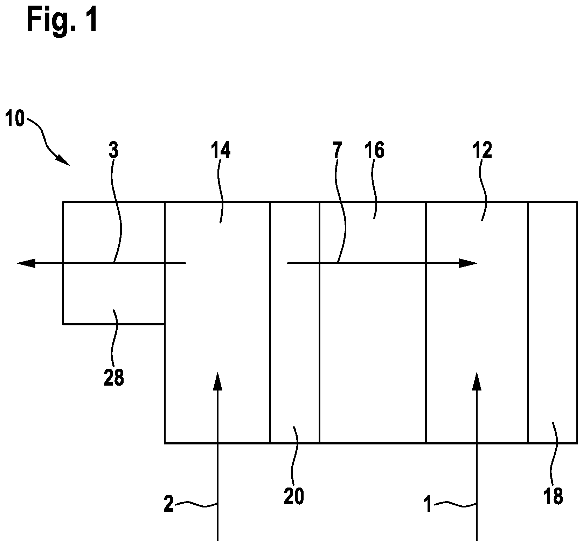

Fig. 1 zeigt ein schematisches Blockdiagramm einer Vorrichtung zum Gewinnen von Wasserstoff 3 aus Wasser 2 unter Verwendung eines Arbeitsstoffs 1 gemäß einer Ausführungsform der vorliegenden Erfindung.

Die Vorrichtung 10 weist eine erste Kammer 12 auf, in welche ein flüssiger oxidierbarer Arbeitsstoff 1 einleitbar ist. Im Folgenden wird Kalium als beispielhafter Arbeitsstoff 1 verwendet. Die Vorrichtung 10 weist eine zweite Kammer 14 auf, in welche Wasser 2 einleitbar ist, welches in der zweiten Kammer 14 in Wasserstoff 3 und Sauerstoff spaltbar ist. Der Sauerstoff wird zumindest teilweise zu Sauerstoffionen, insbesondere doppelt negativen Sauerstoffionen O⁻⁻ ionisiert, wie im Folgenden näher beschrieben wird. Eine Trennungseinrichtung 16 der Vorrichtung 10 ist dazu ausgebildet und angeordnet, die erste Kammer 12 von der zweiten Kammer 14 zu trennen. Die Trennungseinrichtung 16 ist für die Sauerstoffionen 7 durchlässig und für Wasser 2 undurchlässig.

An oder in der ersten Kammer 12 ist eine erste Elektrodeneinrichtung 18 ausgebildet. In oder an der zweiten Kammer 14 ist eine zweite Elektrodeneinrichtung 20 ausgebildet. Die erste Elektrodeneinrichtung 18 ist zum Leiten der abgegebenen Elektronen aus dem Arbeitsstoff 1 an die zweite Elektrodeneinrichtung 20 mit dem in die erste Kammer 12 eingeleiteten Arbeitsstoff 1 elektrisch leitend verbindbar oder verbunden, sodass der Arbeitsstoff 1 in der ersten Kammer 12 als eine flüssige Elektrode fungiert.

Mittels der zweiten Elektrodeneinrichtung 20 ist, mit den an die zweite Elektrodeneinrichtung 20 geleiteten Elektronen, Sauerstoff zu Sauerstoffionen 7 ionisierbar, sodass der Arbeitsstoff 1 in der ersten Kammer 12 nach einem Transport der Sauerstoffionen 7 von der zweiten Kammer 14 durch die Trennungseinrichtung 16 in die erste Kammer 12, durch die Sauerstoffionen 7 unter Abgabe von Elektronen zumindest teilweise oxidierbar ist, wodurch ein oxidierter Arbeitsstoff entsteht, beispielsweise Kaliumoxid, K₂O. Mittels einer Ausleiteinrichtung 28 ist der bei dem Spalten des Wassers 2 erzeugte Wasserstoff 3 aus der zweiten Kammer 14 ausleitbar.

Die Ausleiteinrichtung 28 kann im einfachsten Fall ein Loch in einem Gehäuse der Vorrichtung 10 sein. In diesem Fall kann durch die zweite Kammer 14 alternativ zu Wasser 2 auch ein Gas, welches zumindest teilweise Sauerstoff enthält, durch die zweite Kammer 14 hindurchgeleitet werden. Dadurch kann einerseits elektrische Energie erzeugt werden, andererseits aber auch durch Anlegen einer entsprechenden Spannung der Arbeitsstoff 1 mittels elektrischer Energie regeneriert werden. Eine Trennung von aus dem Loch ausgeleitetem Wasser 2 und Wasserstoff 3 kann durch eine externe Vorrichtung erfolgen.

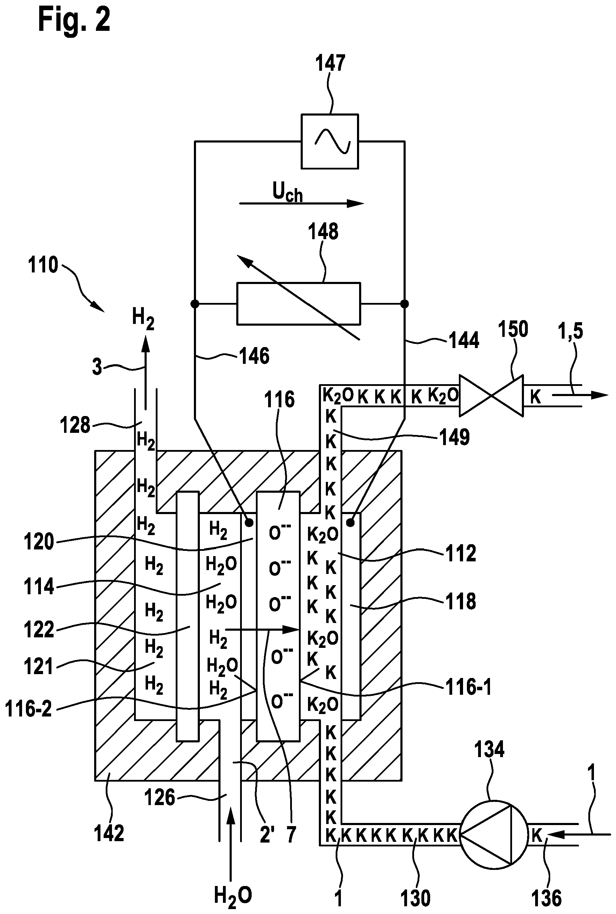

Fig. 2 zeigt eine schematische Darstellung einer Vorrichtung 110 zum Gewinnen von Wasserstoff 3 aus Wasser 2 unter Verwendung eines Arbeitsstoffs 1 gemäß einer weiteren Ausführungsform der vorliegenden Erfindung. Die Vorrichtung 110 ist eine Variante der Vorrichtung 10.

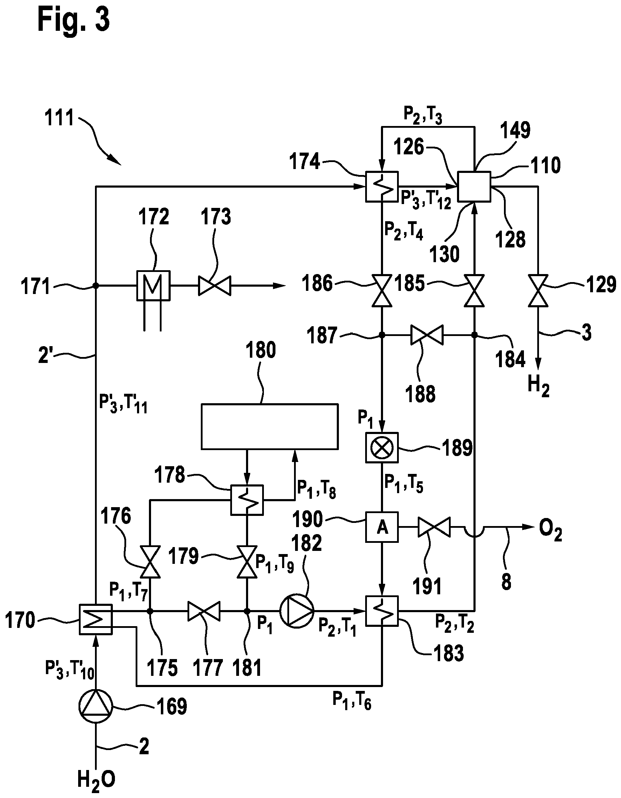

Die Vorrichtung 110 wird im Folgenden gleichzeitig mit einem erfindungsgemäßen Verfahren zum Gewinnen von Wasserstoff 3 aus Wasser 2 beschrieben, welches vorteilhaft mit der Vorrichtung 110 verwendbar ist. Dabei wird teilweise auch auf Elemente und Bezugszeichen des in Fig. 3 gezeigten Systems 111 verwiesen, welches die Vorrichtung 110 aufweisen kann.

Bei der Vorrichtung 110 wird flüssiges Kalium 1 aus einer Leitung 136 mittels einer Arbeitsstoffpumpe 134, welche einen gewünschten Arbeitsdruck des flüssigen Kaliums 1 herzustellen ausgebildet ist, über einen Arbeitsstoff-Einlass 130 in die erste Kammer 112 gepumpt. Über einen Wasser-Einlass 126 ist dampfförmiges Wasser 2' in die zweite Kammer 114 einleitbar. Die erste und die zweite Kammer 112, 114 sind in einem Reaktorgehäuse 142 ausgebildet. Zwischen der ersten Kammer 112 und der zweiten Kammer 114 ist die Trennungseinrichtung aus einem Feststoffelektrolyten 116, vorzugsweise Zirkoniumdioxid, ausgebildet, welche für negativ geladene Sauerstoffionen 7 durchlässig, aber für Wassermoleküle undurchlässig ist. An einer der zweiten Kammer 114 zugewandten Außenseite 116-2 des Feststoffelektrolyten 116 ist der Feststoffelektrolyt 116 mit einer als eine poröse, gasdurchlässige, inerte und katalytisch wirkende Kathode 120 ausgebildeten zweiten Elektrodeneinrichtung 120 beschichtet. Optional ist der Feststoffelektrolyt 116 auf einer der ersten Kammer 112 zugewandten ersten Außenseite 116-1 mit einer, vorzugsweise dünnen, katalytischen Schicht, beispielsweise aus Platin, beschichtet oder dotiert, welche durchlässig für sowohl Atome des Arbeitsstoffs, hier etwa Kaliumatome, als auch für Sauerstoffatome ist. Die katalytische Schicht kann insbesondere zur Reduzierung einer Überspannung beitragen.

In der ersten Kammer 112 entnehmen Kaliumatome dem Feststoffelektrolyten 116 Sauerstoffionen 7, wobei jeweils zwei Kaliumatome unter Abgabe von insgesamt zwei Elektronen zu Kaliumoxid, K₂O reagieren. In der zweiten Kammer 114 werden in Wassermolekülen des dampfförmigen Wassers 2' enthaltene Sauerstoffatome ionisiert, wobei jedes zu ionisierende Sauerstoffatom zwei Elektronen von der Kathode 120 aufgenommen hat. Die zweifach negativ geladenen Sauerstoffionen 7 können in den Feststoffelektrolyten 116 eindringen, wobei die Wasserstoffatome aus den Wassermolekülen, deren Sauerstoffatome ionisiert wurden, in der zweiten Kammer 114 zurückbleiben. Die zweite Kammer 114 weist eine für Wasserstoff durchlässige Membran 122 auf, welche für Wasserdampfmoleküle bzw. Wassermoleküle undurchlässig ist. Die wasserstoffdurchlässige Membran 122 ist der einzige Durchgang zwischen der zweiten Kammer 114 und einem Sammelhohlraum 121, aus welchem über einen Wasserstoff-Auslass 128 der Wasserstoff 3 ausleitbar ist.

Die bei der Reaktion von je zwei Kaliumatomen mit je einem Sauerstoffion zu Kaliumoxid, K₂O frei werdenden zwei Elektronen, gelangen über das für Elektronen leitfähige Kalium, welches dabei als eine flüssige Elektrode fungiert, über eine räumlich von dem Feststoffelektrolyten 116 getrennt angeordnete erste Elektrodeneinrichtung 118. Insbesondere ist die erste Kammer 112 vollständig zwischen dem Feststoffelektrolyten 116 und der ersten Elektrodeneinrichtung 118 angeordnet. Die erste Elektrodeneinrichtung 118 ist über eine erste elektrische Leitung 144 mit einem verstellbaren elektrischen Widerstand 148 verbunden, welcher wiederum über eine zweite elektrische Leitung 146 mit der Kathode 120 elektrisch verbunden ist. Somit werden die von den Kaliumatomen abgegebenen Elektronen wieder zum Ionisieren der Sauerstoffatome in der zweiten Kammer 114 bereitgestellt. Mittels des verstellbaren Widerstands 148 kann eine Geschwindigkeit der Reaktion herabgesetzt, beschleunigt oder ganz zum Erliegen gebracht werden. Als verstellbarer Widerstand kann eine beliebige Spannungssenke verwendet werden, das heißt eine variable Last. Insbesondere kann eine Potenzialdifferenz an dem verstellbaren Widerstand zur Energiegewinnung verwendet werden.

In der ersten Kammer 112 entsteht bei der beschriebenen Reaktion somit ein Gemisch aus flüssigem Kalium als dem Arbeitsstoff und Kaliumoxid als einem oxidierten Arbeitsstoff 5.

Das Gemisch aus dem Arbeitsstoff 1 und dem oxidierten Arbeitsstoff 5, also aus Kalium, K, und Kaliumoxid, K₂O, ist mittels eines Arbeitsstoff-Auslasses 149 aus der ersten Kammer 112 ableitbar und einem Arbeitsstoff-Ventil 150 zuleitbar. In einem Folgeschritt wird mittels Thermolyse das entstandene Kaliumoxid, K₂O, wieder zu Kalium, K, regeneriert. Oberhalb von 350°C beginnt Kaliumoxid, K₂O, in einer endothermen Reaktion, in seine Elemente, Kalium und Sauerstoff, zu zerfallen. Je größer die Temperatur und je geringer ein Druck des Kalium-Kaliumoxidgemisches ist, desto mehr Kaliumoxidmoleküle zerfallen zu Kalium und Sauerstoff. Der Sauerstoff wird dann mittels bekannter Verfahren von dem Kalium abgeschieden.

Mittels einer optionalen Spannungsquelle 147 ist eine elektrische Spannung zwischen der Anode 118 und der Kathode 120 anlegbar. Die optionale Spannungsquelle 147 kann im Allgemeinen als Reihenschaltung einer elektrischen Impedanz und einer variablen idealen Spannungsquelle, insbesondere Gleichspannungsquelle, betrachtet werden, welche sowohl elektrische Energie aufnehmen als auch abgeben kann. Die elektrische Spannung der Spannungsquelle 147 ist beispielsweise dazu verwendbar, eine etwaige negative chemische Potentialdifferenz U_{ch} zwischen dem Arbeitsstoff 1 und Wasser zu überbrücken. Somit ist beispielsweise statt Kalium auch Quecksilber als Arbeitsstoff verwendbar, wobei eine entsprechende Spannung angelegt wird. Andererseits kann die elektrische Spannungsquelle 147 auch dazu verwendet werden, vom Oxidationsprozess des Arbeitsstoffs 1 freigesetzte elektrische Energie ganz oder teilweise aufzunehmen, beispielsweise zum Aufladen von Batterien oder zum Betreiben von elektrischen Verbrauchern.

In das Reaktorgehäuse 142 strömt durch den Wasser-Einlass 126 überhitzter Wasserdampf 2' in die zweite Kammer 114 und gelangt dort an die Kathode 120. Zwischen der Kathode 120 und dem für Sauerstoffionen 7 durchlässigen Feststoffelektrolyten 116 ist eine elektrische Potentialdifferenz eingestellt, etwa durch die Wahl des Arbeitsstoffs 1 und/oder ein Anlegen einer Spannung Uch zwischen Anode 118 und Kathode 120 und/oder durch Einstellen einer Temperatur des Wassers 2 oder des Wasserdampfs 2'. Die elektrische Potentialdifferenz hat zur Folge, dass Wassermoleküle 2 aufgespalten werden in molekularen Wasserstoff H₂ und Sauerstoff, O.

Die Wasserstoffmoleküle 3, H₂, bewegen sich frei in der zweiten Kammer 114 und durchdringen, verursacht durch ihren Partialdruck, die poröse, gasdurchlässige Membran 122, welche wie ein Filter oder Sieb wirkt und nur Wasserstoffatome 3 hindurch lässt. Die Wasserstoffmoleküle 3, H₂, gelangen so in den dahinter gelegenen Sammelhohlraum 121 und werden von dort aus dem Reaktorgehäuse 142 abgeführt.

Die wesentlich größeren Wassermoleküle 2 können die Membran 122 nicht durchdringen und verbleiben in der zweiten Kammer 114. Die zwischen der Kathode 120 und dem Feststoffelektrolyten 116 bei der Wasserspaltung freigesetzten Sauerstoffatome werden von der Kathode 120 mit jeweils zwei Elektronen zu Sauerstoffionen 7 ionisiert und durchqueren daraufhin den Feststoffelektrolyten 116. Wenn die Sauerstoffionen 7, O⁻⁻, den Feststoffelektrolyten 116 durchdrungen haben, gelangen sie in die erste Kammer 112 und reagieren, etwa an der Grenzfläche zwischen dem Feststoffelektrolyten 116 und der ersten Kammer 112, mit flüssigem Kalium als Arbeitsstoff 1 zu Kaliumoxid, K₂O. Bei dieser an der Grenzfläche stattfindenden chemischen Reaktion, welche die treibende Kraft für den vorliegenden Prozess ist, werden zwei Elektronen freigesetzt. Die freigesetzten Elektronen durchqueren die erste Kammer 112, welche mit dem flüssigen und elektrisch leitfähigen Kalium gefüllt ist, bis hin zu der Anode 118. Die Elektronen gelangen von der Anode 118 über den verstellbaren elektrischen Widerstand 148 zurück zur Kathode 120, wo sie zum Ionisieren weiterer Sauerstoffatome bereitgestellt sind.

Die elektrochemische Spannung welche an dem verstellbaren Widerstand 148 abfällt, erreicht ihren Maximalwert, wenn der Widerstandswert des verstellbaren Widerstands 148 sehr groß eingestellt wird bzw. wenn der Stromkreis zwischen Anode 118, Kathode 120 und dem verstellbaren Widerstand 148 unterbrochen ist. In diesem Fall ist kein Elektronenfluss mehr möglich und es können keine Sauerstoffionen mehr in den Feststoffelektrolyten 116 eintreten, noch von dort wieder herauskommen, womit der Prozess gestoppt ist. Im Gegenzug verläuft der Prozess umso schneller, je kleiner der Widerstandswert des verstellbaren elektrischen Widerstands 148 eingestellt ist.

Mittels der Kaliumpumpe 134 wird ständig heißes flüssiges Kalium K als Arbeitsstoff 1 in die erste Kammer 114 gepumpt. Eine Temperatur T₂ des Kaliums sowie eine Temperatur T'₁₂ des Wasserdampfes 2 ist bei Eintritt in das Reaktorgehäuse 142 so gewählt, dass der Feststoffelektrolyt 116 für die Sauerstoffionen 7 leitfähig ist. Vorteilhaft werden die Temperaturen T₂ und T'₁₂ so eingestellt, dass eine Maximaltemperatur im Reaktorgehäuse 142 von etwa 950°C nach der exothermen Reaktion von Kalium mit Sauerstoff aus dem Feststoffelektrolyten 116 nicht überschritten wird. Eine Temperatur T₁₃ in dem Reaktorgehäuse 142 kann über eine Durchflussmenge des Kaliums durch den Arbeitsstoff-Zulauf 130 geregelt werden.

Das Kalium verlässt zusammen mit dem in der ersten Kammer 114 entstandenen Kaliumoxid mit einer durch den Prozess verursacht erhöhten Temperatur T₃ durch den Arbeitsstoff-Auslass 149 das Reaktorgehäuse 142 und gelangt zu dem Arbeitsstoff-Drosselventil 150. Mittels einer entsprechenden Einstellung der Arbeitsstoffpumpe 134 und dem Arbeitsstoff-Drosselventil 150 kann in der ersten Kammer 114 ein geeigneter Prozessdruck eingestellt werden, welcher beispielsweise so gewählt wird, dass sich möglichst viele Kaliumoxidmoleküle bilden können bzw. möglichst wenig gebildete Kaliumoxidmoleküle in der ersten Kammer 114 thermisch wieder zerfallen. Nachdem das Kalium-Kaliumoxidgemisch 1, 5 an dem Arbeitsstoff-Drosselventil 150 entspannt wird, zerfallen einige Kaliumoxidmoleküle in einer endothermen Reaktion in ihre Elemente, wobei die Temperatur T₃ abfällt. Durch weiteres Erhitzen zerfallen immer mehr Kaliumoxidmoleküle 5, wobei der dabei freigesetzte Sauerstoff, aus dem Arbeitsstoffkreislauf abgeschieden und das regenerierte Kalium 1 wieder über die Arbeitsstoff-Pumpe 134 dem beschriebenen Kreisprozess zugeführt wird.

Fig. 3 zeigt eine schematische Darstellung eines Systems 111 zum Gewinnen von Wasserstoff 3 aus Wasser 2 unter Verwendung eines Arbeitsstoffs gemäß einer weiteren Ausführungsform der vorliegenden Erfindung. Das System 111 umfasst gemäß Fig. 3 die Vorrichtung 110. Alternativ oder zusätzlich kann das System 111 aber auch die Vorrichtung 10 oder eine der im Folgenden beschriebenen Vorrichtungen 210, 310 oder eine der vorangehend oder nachfolgend in Bezug auf eine der Vorrichtungen 10, 210, 310 beschriebenen Weiterbildungen umfassen. Das System 111 wird im Folgenden gleichzeitig mit weiteren Schritten des erfindungsgemäßen Verfahrens zum Gewinnen von Wasserstoff 3 aus Wasser 2 beschrieben, welches vorteilhaft auch mit dem System 111 verwendbar ist. Andererseits ist das System 111 insbesondere dazu ausgebildet, das beschriebene Verfahren durchzuführen. Auch die Vorrichtung 110 ist gemäß allen in Bezug auf das System 111 beschriebenen Alternativen und Merkmalen anpassbar.

Flüssiges Wasser 2 wird von einer Wasserpumpe 169 des Systems 111 mit einem Druck P'₃ und einer Temperatur T'₁₀ in einen Verdampfer 170 des Systems 111 gepumpt und dort bei der Temperatur T'₁₁ verdampft. Der so erzeugte Wasserdampf 2' wird in einem ersten Gegenstromrekuperator 174 des Systems 111 auf die Temperatur T'₁₂ überhitzt und strömt dann durch den Wasser-Einlass 126 in die Vorrichtung 110. Dort wird der Wasserdampf 2' in H₂-Moleküle und Sauerstoff zersetzt, wie oben in Bezug auf Fig. 2 beschrieben. Der Sauerstoff geht durch die chemische Reaktion mit Kalium zu K₂O, also Kaliumoxid, in den Arbeitsstoffkreislauf über, welcher im Folgenden näher erläutert wird. Die zurückbleibenden Wasserstoffmoleküle 3 werden von dem Wasserdampf 2' getrennt, wie in Bezug auf Fig. 2 beschrieben, und verlassen über den Wasserstoff-Auslass 128 und ein Absperrventil 129 des Systems 111 das System 111.

Um im Bedarfsfall überschüssige Wärme aus dem Arbeitsstoffkreislauf abführen zu können, kann aus dem Verdampfer 170 kommender Wasserdampf 2' in einem Kondensator 172 des Systems 111 kondensieren und das dabei entstehende Wasser über ein nachfolgendes Drosselventil 173 des Systems 111 aus dem System 111 abgeführt werden. Der Kondensator 172 kann über einen Knoten 171 an eine Wasserdampfleitung zwischen dem Verdampfer 170 und dem ersten Gegenstromrekuperator 174 angeschlossen sein.

Der flüssige Arbeitsstoff 1, im vorliegenden Beispiel Kalium, wird von einer Arbeitsstoffpumpe 182 unter Druckanstieg von einem Druck P₁ auf einen Druck P₂ mit einer Temperatur T₁ durch einen zweiten Gegenstromrekuperator 183 des Systems 111 gefördert, wobei die Temperatur des Kaliums bei gleichbleibendem Druck P₂ auf eine Temperatur T₂ steigt. Das Kalium fließt durch ein geöffnetes erstes Absperrventil 185 des Systems 111 und gelangt zu dem Arbeitsstoff-Einlass 130 in die Vorrichtung 110. Die Arbeitsstoffpumpe 134 gemäß Fig. 2 kann bei Integration der Vorrichtung 110 in dem System 111 entfallen oder mit der Arbeitsstoffpumpe 182 identifiziert werden. In der Vorrichtung 110 reagiert das Kalium, wie oben beschrieben, mit Sauerstoff in einer exothermen Reaktion zu Kaliumoxid, K₂O, wobei die Temperatur der Flüssigkeit dabei bei gleichbleibendem Druck P₂ weiter auf eine Temperatur T₃ ansteigt. Das Gemisch aus Kalium 1 und Kaliumoxid 5 verlässt die Vorrichtung 110 durch den Arbeitsstoff-Auslass 149 und durchströmt zum Überhitzen des Wasserdampfs 2' den ersten Gegenstromrekuperator 174, wobei die Temperatur des Kalium-Kaliumoxid-Gemischs 1, 5 bei gleichbleibendem Druck P₂ auf eine Temperatur T₄ fällt. An einem ersten Drosselventil 186 des Systems 111 fällt der Druck P₂ des Kalium-Kaliumoxid-Gemischs 1, 5 auf den Druck P₁ ab, wodurch bereits einige Kaliumoxidmoleküle in ihre Elemente, Kalium 1 und Sauerstoff 8, zerfallen.

Mit dem jetzt für die einsetzende Thermolyse günstigen Druck P₁ gelangt das Kalium-Kaliumoxid-Gemisch 1, 5 in eine Heizeinrichtung 189. In der Heizeinrichtung 189 zerfällt unter Zufuhr von thermischer Energie in einer endothermen Reaktion das Kaliumoxid 5 zu Kalium 1 und Sauerstoff. Das Kalium-Kaliumoxid-Gemisch verlässt die Heizeinrichtung 189 mit der Temperatur T₅, welche in etwa auf dem Niveau der Temperatur T₄ liegen sollte, und gelangt dann in einen Abscheider 190 des Systems 111. In dem Abscheider 190 wird der Sauerstoff 8 von dem Kalium 1 getrennt und aus dem System 111 über ein geöffnetes Sauerstoff-Ausgangsventil 191 des Systems 111 abgeführt.

Das regenerierte Kalium 1 durchläuft den zweiten Gegenstromrekuperator 183 und gibt dort den überwiegenden Teil seiner Wärme ab, wobei die Temperatur des Kaliums 1 auf eine Temperatur T₆ abfällt. Im Anschluss durchläuft das Kalium 1 den Verdampfer 170, wobei ein Teil der in dem Kalium 1 enthaltenen Restwärme zum Verdampfen des Wassers 2 verwendet wird, wobei die Temperatur des Kaliums 1 bei gleichbleibendem Druck P₁ weiter auf eine Temperatur T₇ abfällt.

Zwischen dem Verdampfer 170 und der Arbeitsstoffpumpe 182 sind in dem Arbeitsstoffkreislauf ein erster Abzweigeknoten 175 und ein zweiter Abzweigeknoten 181 angeordnet. Zwischen einem ersten Ausgang des ersten Abzweigeknotens 175 und einem ersten Ausgang des zweiten Abzweigeknotens 181 ist ein zweites Absperrventil 177 ausgebildet.

Ein zweiter Ausgang des ersten Abzweigeknotens 175 ist mit einem dritten Absperrventil 176 verbunden. Ein zweiter Ausgang des zweiten Abzweigeknotens 181 ist mit einem vierten Absperrventil 179 verbunden.

Sofern die Vorrichtung 110 und die Heizeinrichtung 189 gleichzeitig in Betrieb sind und das in einem Vorratstank 180 für den Arbeitsstoff 1 des Systems 111 enthaltene Kalium nicht regeneriert werden muss oder soll, sind das dritte und das vierte Absperrventil 176, 179 geschlossen und das regenerierte Kalium 1 gelangt durch das geöffnete zweite Absperrventil 177 wieder zur Kaliumpumpe 8.

Für den Fall, dass aus dem Vorratstank 180 kommendes Kaliumoxid 5 zu Kalium 1 regeneriert werden und gleichzeitig gerade kein Wasserstoff 3 hergestellt werden soll, ist das zu der Vorrichtung 110 führende erste Absperrventil 185 geschlossen und das Kalium-Kaliumoxidgemisch 1, 5 strömt direkt zur Regeneration durch ein zweites Drosselventil 188, wobei der Druck von P₂ auf P₁ abfällt und wobei das zweite Drosselventil 188 einen dritten Abzweigungsknoten 184 am Eingang des ersten Absperrventils 185 mit einem vierten Abzweigungsknoten 187 am Ausgang des ersten Drosselventils 186 verbindet.

Das zweite Absperrventil 177 ist hierbei geschlossen und das dritte und das vierte Absperrventil 176, 179 sind geöffnet, um den Kaliumkreislauf durch den Vorratstank 180 zu führen. Das von dem dritten Absperrventil 176 kommende Kalium 1 gibt seine Restwärme in einem dritten Gegenstromrekuperator 178 ab, wobei die Temperatur auf T₈ abfällt, und gelangt dann in den Vorratstank 180. Das aus dem Vorratstank 180 in den Kreislauf eintretende Kalium 1 wird in dem dritten Gegenstromrekuperator 178 auf die Temperatur T₉ vorgewärmt und gelangt dann zur Kalium- bzw. Arbeitsstoffpumpe 182.

Für den Fall, dass Wasserstoff 3 produziert werden soll, während die für die Thermolyse verwendete Heizeinrichtung 189 gleichzeitig deaktiviert ist, wird der Kaliumkreislauf wieder durch den Vorratstank 180 geführt. Das zweite Drosselventil 188 ist komplett geschlossen und auch das Sauerstoff-Ausgangsventil 191 am Abscheider ist komplett geschlossen. Der Druckabfall von P₂ auf P₁ wird auf einem Temperaturniveau durchgeführt, bei welchem keine Thermolyse stattfindet. Hierzu ist das erste Drosselventil 186 komplett geöffnet, damit an dieser Stelle der Druck nicht nennenswert abfällt. Die Drosselung von P₂ auf P₁ erfolgt bei der Temperatur T₇ durch das auch als Drosselventil fungierende dritte Absperrventil 176. Die für den Prozess benötigte Wärme wird in der Vorrichtung 110 erzeugt, nämlich durch die exotherme Reaktion von Sauerstoff mit Kalium zu Kaliumoxid, wobei die Temperatur des Kaliums bzw. des Kalium-Kaliumoxid-Gemisches von T₂ auf T₃ ansteigt. Überschüssige Wärme kann dem System 111 entnommen werden, wenn über eine gelegentliche Drosselung des Drucks durch das erste Drosselventil 186 die endotherme Thermolyse des Kaliumoxids 5 einsetzt und der dabei entstehende Sauerstoff 8 über das Sauerstoff-Ausgangsventil 191 aus dem System 111 abgeführt wird. In dieser Betriebsart steigt die Kaliumoxidkonzentration im Vorratstank T allmählich an.

Wird der Vorratstank 180 relativ zu der Vorrichtung 110 entsprechend groß dimensioniert, so kann die Vorrichtung 110 im Dauerbetrieb laufen und permanent Wasserstoff 3 produzieren, wenn die Kaliumregeneration mittels Thermolyse in der Heizeinrichtung 189 temporär stattfindet und nur dann durchgeführt wird oder durchgeführt zu werden braucht, wenn gerade Wärmeenergie zur Verfügung steht, beispielsweise durch konzentrierte Sonnenstrahlung.

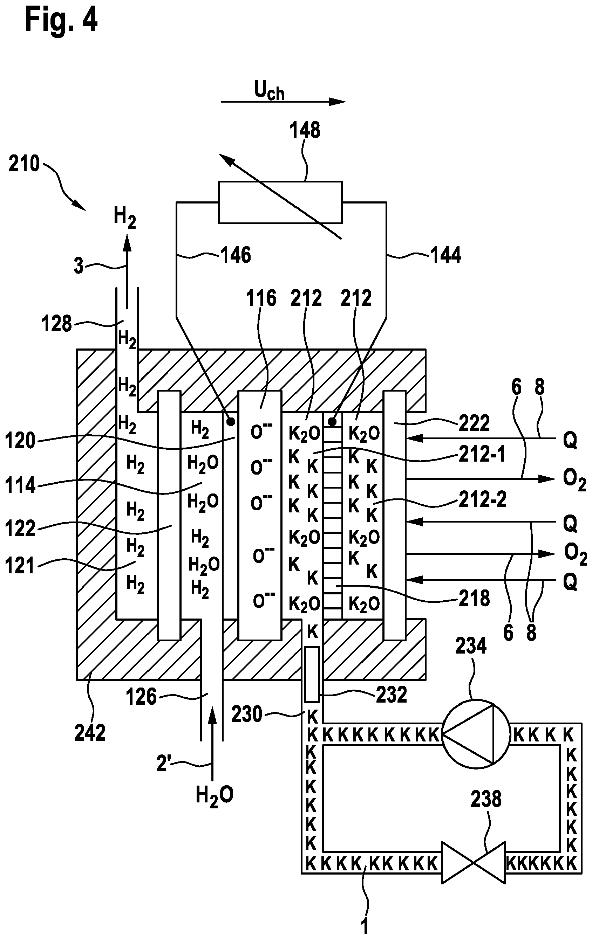

Fig. 4 zeigt eine schematische Darstellung einer Vorrichtung 210 zum Gewinnen von Wasserstoff 3 aus Wasser 2 unter Verwendung eines Arbeitsstoffs 1 gemäß einer weiteren Ausführungsform der vorliegenden Erfindung. Die Vorrichtung 210 ist eine Variante der Vorrichtung 110. Insbesondere in der Vorrichtung 210 kann der Arbeitsstoff 1 dauerhaft in einem geschlossenen Kreislauf vorhanden sein, d.h. er braucht nicht eingeleitet zu werden.

In das Reaktorgehäuse 242 der Vorrichtung 210 strömt überhitzter Wasserdampf 2' in die zweite Kammer 114 und gelangt dort an die poröse, gasdurchlässige, inerte und katalytisch wirkende Kathode 120, vorzugsweise aus Platin. Zwischen der Kathode 120 und dem für Sauerstoffionen durchlässigen Feststoffelektrolyten 116 besteht eine elektrische Potentialdifferenz U_{ch}, welche zur Folge hat, dass Wassermoleküle aufgespalten werden in molekularen Wasserstoff H₂ und Sauerstoff. Die Wasserstoffmoleküle H₂ bewegen sich frei in der zweiten Kammer 114 und durchdringen, verursacht durch ihren Partialdruck, die poröse, gasdurchlässige Membran 122, welche wie ein Filter wirkt und nur Wasserstoffatome hindurchlässt.

Im Gegensatz zur Vorrichtung 110 ist bei der Vorrichtung 210 eine gelochte inerte Elektrode, nämliche eine Anode 218, als die erste Elektrodeneinrichtung, derart in der ersten Kammer 212 der Vorrichtung 210 angeordnet, dass die erste Kammer 212 durch die Anode 218 in ein erstes Volumen 212-1 zwischen der Anode 218 und dem Feststoffelektrolyten 116 und ein zweites Volumen 212-2 zwischen der Anode 218 und einer Außenwand der ersten Kammer 212 geteilt wird, wobei diese Außenwand der ersten Kammer 212 ganz oder teilweise durch eine poröse gasdurchlässige zweite Membran 222 gebildet wird. Die zweite Membran 222 ist durchlässig für Sauerstoffatome, insbesondere von innerhalb des Gehäuses 242 nach außen, vorzugsweise nur von innerhalb des Gehäuses 242 nach außen, stellt aber eine Sperre für Kaliumatome dar. Über die zweite Membran 222 ist Wärme Q auf das Kalium 1 in der ersten Kammer 212 übertragbar, insbesondere von außerhalb des Gehäuses 242.

Die mit dem Arbeitsstoff 1 befüllte erste Kammer 212, welche auch als Oxidationskammer bezeichenbar ist, kann als ein geschlossener Hohlraum ausgebildet sein, aus welchem nur Sauerstoff 6 durch die zweite Membran 222 entweichen kann, während der oxidierte oder nicht-oxidierte Arbeitsstoff 1, 5 permanent in der ersten Kammer 212 verbleibt.

Mittels einer Druckerzeugungseinrichtung 234 und einem Arbeitsstoff-Drosselventil 238 wird über einen in dem Arbeitsstoff-Einlass 230 angeordneten Stift 232 ein gewünschter Prozessdruck in der ersten Kammer 212 eingestellt. Gemäß Fig. 4 führt der Arbeitsstoff-Einlass 230 in das erste Volumen 212-1 der ersten Kammer 212, alternativ könnte der Arbeitsstoff-Einlass 230 auch in das zweite Volumen 212-2 der ersten Kammer 212 führen. Der Stift 232 dient dazu, dass kein Kaliumoxid, K₂O, die erste Kammer 212 in Richtung des Pumpkreislaufs bzw. der Druckerzeugungsvorrichtung 234, verlassen kann.

Alternativ kann der Stift 232 auch durch eine elastische dritte Membran ersetzt werden, welche fest mit dem Gehäuse 242 verbunden ist. Durch Anlegen eines Drucks auf die dritte Membran kann somit ein Arbeitsdruck auf den Arbeitsstoff 1 in die erste Kammer 212 übertragen werden. Der auf die dritte Membran ausgeübte Druck muss nicht notwendigerweise von der Druckerzeugungseinrichtung 234 erzeugt werden, sondern kann beispielsweise auch von einem Piezoaktuator verursacht werden. Weiterhin kann sowohl der Stift 232 als auch die Bohrung im Gehäuse 242 für den Stift 232 komplett entfallen, wobei in oder an der ersten Kammer 212 zumindest ein Bauteil installiert ist, dessen Werkstoff einen anderen Wärmeausdehnungskoeffizienten hat als der Arbeitsstoff 1 in der ersten Kammer, so dass sich bei einer für den Prozess geeigneten Arbeitstemperatur des Arbeitsstoffs 1 ein für den Prozess geeigneter Arbeitsdruck des Arbeitsstoffs 1 einstellt.

In der ersten Kammer 212 herrscht unter einem bestimmten Druck und bei einer bestimmten Temperatur eine jeweils konstante Konzentration von Kalium, Kaliumoxid und Sauerstoff. Die Konzentrationen aller drei Stoffe stehen zueinander in einem chemischen Gleichgewicht. Über die zweite Membran 222 können Sauerstoffatome, O, oder Sauerstoffmoleküle 6 aus der ersten Kammer 212 entweichen und werden aus dem Reaktorgehäuse 242 abgeführt. Dadurch verringern sich die Konzentrationen von Kaliumoxid und Sauerstoff in der ersten Kammer 212, was zur Folge hat, dass weitere Sauerstoffionen, O⁻⁻ aus dem Feststoffelektrolyten 116 mit dem Kalium in der ersten Kammer 212 reagieren, bis sich erneut ein chemisches Gleichgewicht einstellt. In Summe können Sauerstoffatome daher nur in eine Richtung wandern. Durch den thermischen Zerfall des Kaliumoxids in der ersten Kammer 212 (endotherme Reaktion) fällt die Temperatur des Kaliums stärker ab als sie ansteigt durch die gleichzeitig ablaufende exotherme partielle Reaktion von Kalium und Sauerstoff über den Feststoffelektrolyten 116. Um bei gegebenem Sauerstoffdurchsatz eine konstante Prozesstemperatur zu halten, wird dem System über die zweite Membran 222 ständig Wärmeenergie 8, Q, von außen zugeführt. Die Prozesstemperatur im Reaktorgehäuse 242 ist derart wählbar, dass der Feststoffelektrolyt 116 für Sauerstoffionen leitfähig ist. Vorteilhaft wird eine obere Grenze für die Temperatur in dem Reaktorgehäuse 242 von etwa 950°C nicht überschritten. Die Vorrichtung 210 ist vorteilhaft auch in miniaturisierter Version, beispielsweise mit mikromechanischer Technologie und/oder auf Waferlevel ausbildbar.

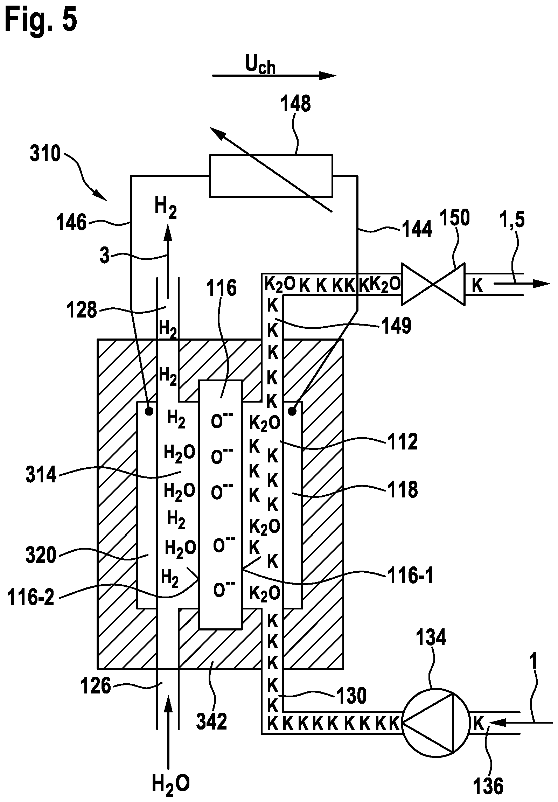

Fig. 5 zeigt eine schematische Darstellung einer Vorrichtung 310 zum Gewinnen von Wasserstoff 3 aus Wasser 2 unter Verwendung eines Arbeitsstoffs 1 gemäß einer weiteren Ausführungsform der vorliegenden Erfindung. Die Vorrichtung 310 ist eine Variante der Vorrichtung 110 und ist auch als "Niedertemperaturreaktor" bezeichenbar.

Die Vorrichtung 310 unterscheidet sich von der Vorrichtung 110 vornehmlich in der Ausgestaltung der zweiten Kammer 314. Statt wie in der Vorrichtung 110, nämlich an dem Feststoffelektrolyten 116 anliegend, ist die Kathode 320 der Vorrichtung 310 von dem Feststoffelektrolyten 116 durch die erste Kammer 314 beabstandet. Die Kathode 320 als zweite Elektrodeneinrichtung ist über das in die zweite Kammer 314 eingeleitete Wasser elektrisch mit dem Feststoffelektrolyten 116 verbunden bzw. verbindbar. Dazu wird flüssiges Wasser 2, insbesondere elektrolytisches Wasser, durch das Reaktorgehäuse 342, über den Wasser-Einlass 126 in die zweite Kammer 314 eingeleitet.

Das elektrolytische, flüssige Wasser 2, beispielsweise Kaliumhydroxidlösung, strömt in die zweite Kammer 314. Von der Kathode 320 ausgehend fließt durch das flüssige Wasser 2 ein elektrischer Strom in Richtung des Feststoffelektrolyten 116. An den Oberflächen des Feststoffelektrolyten 116 finden an beiden Seiten bei niedriger Temperatur chemische Reaktionen statt. Der Feststoffelektrolyt 116 ist vorzugsweise beidseitig mit einer dünnen katalytischen Schicht dotiert, z.B. mit Platin, um die Aktivierungsenergie der an den Oberflächen stattfindenden chemischen Reaktionen herabzusetzen und/oder diese zu beschleunigen.

An der mit Wasser 2 benetzten Grenzfläche der zweiten Kammer 314 mit dem Feststoffelektrolyten 116, d.h. an der zweiten Außenseite 116-2 des Feststoffelektrolyten 116, besteht eine Potenzialdifferenz U_{ch}, welche zur Folge hat, dass die Wassermoleküle aufgespalten werden in molekularen Wasserstoff H₂ und Sauerstoff. Der molekulare Wasserstoff bildet Gasbläschen und wird in Gasform aus der Vorrichtung 310 über den Wasserstoff-Auslass 128 abgeführt. Die an der Grenzschicht freigesetzten Sauerstoffatome werden mit jeweils zwei von der Kathode 320 über das elektrolytische flüssige Wasser 2 geleitete Elektronen ionisiert und dringen daraufhin in den Feststoffelektrolyten 116 ein.

Sobald die Sauerstoffionen den Feststoffelektrolyten 116 durchquert haben, gelangen sie in die erste Kammer 112 und reagieren an der Grenzfläche zwischen dem Feststoffelektrolyten 116 und der ersten Kammer 112, also an der ersten Außenseite 116-1 des Feststoffelektrolyten 116, mit flüssigem Kalium als dem Arbeitsstoff 1 zu Kaliumoxid. Bei dieser an der ersten Außenseite 116-1 des Feststoffelektrolyten 116 stattfindenden chemischen Reaktion, welche als treibende Kraft für den beschriebenen Prozess bezeichenbar ist, werden zwei Elektronen freigesetzt. Diese zwei Elektronen durchqueren die erste Kammer 112, welche bei Betrieb der Vorrichtung 310 mit flüssigem Kalium als flüssigem und elektrisch leitfähigem Arbeitsstoff 1 gefüllt ist, bis hin zu der Anode 118. Die Elektronen gelangen von der Anode 118 über den verstellbaren elektrischen Widerstand 148 zurück zur Kathode 320, wo sie erneut in das elektrolytische flüssige Wasser 2 eintreten.

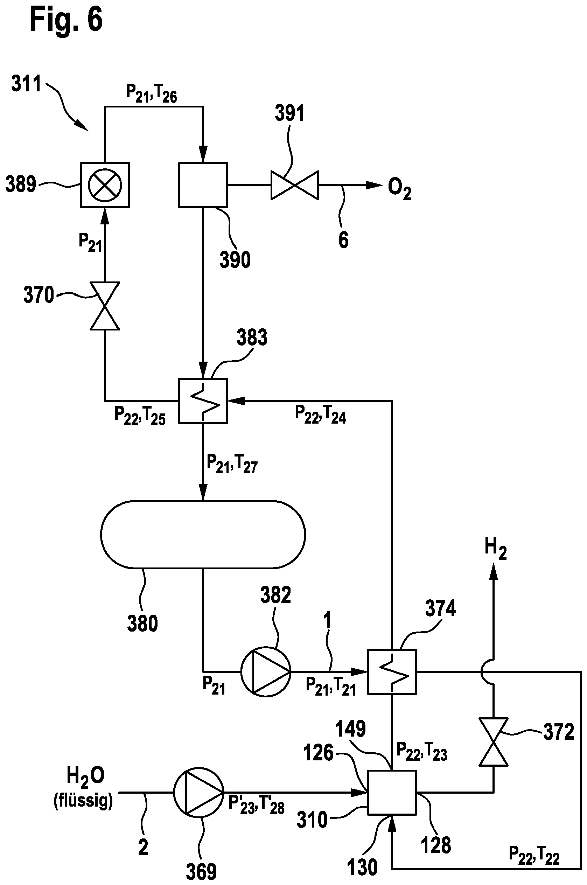

Fig. 6 zeigt eine schematische Darstellung eines Systems 311 zum Gewinnen von Wasserstoff 3 aus Wasser 2 unter Verwendung eines Arbeitsstoffs 1 gemäß einer weiteren Ausführungsform der vorliegenden Erfindung. Das System 311 umfasst gemäß Fig. 6 die Vorrichtung 310. Alternativ oder zusätzlich kann das System 311 aber auch die Vorrichtung 10 oder eine der vorangehend in Bezug auf eine der Vorrichtungen 10, 110, 210 beschriebenen Weiterbildungen umfassen. Das System 311 wird im Folgenden gleichzeitig mit weiteren Schritten des erfindungsgemäßen Verfahren zum Gewinnen von Wasserstoff 3 aus Wasser 2 beschrieben, welches vorteilhaft mit der Vorrichtung 310 und mit dem System 311 verwendbar ist. Andererseits ist das System 311 insbesondere dazu ausgebildet, das beschriebene Verfahren durchzuführen. Auch die Vorrichtung 310 ist gemäß allen in Bezug auf das System 311 beschriebenen Alternativen und Merkmalen anpassbar.

Flüssiges Wasser 2, insbesondere elektrolytisches flüssiges Wasser, wird von einer Wasserpumpe 369 mit einem Druck P'₂₃ und einer Temperatur T'₂₈ in die Vorrichtung 310 gepumpt. In der Vorrichtung 310 wird das Wasser 2, etwa wie in Bezug auf Fig. 5 beschrieben, in Wasserstoffmoleküle und Sauerstoff zersetzt. Der Sauerstoff geht durch die chemische Reaktion mit Kalium zu Kaliumoxid in den Kaliumkreislauf über. Die zurückbleibenden Wasserstoffmoleküle werden vom Wasser abgeschieden und verlassen über ein Wasserstoff-Absperrventil 372, welches an den Wasserstoff-Auslass 128 angeschlossen ist, das System 311.

Flüssiges Kalium als Arbeitsstoff 1 wird von der Arbeitsstoffpumpe 382 unter Druckanstieg von einem Druck P₂₁ auf einen Druck P₂₂ mit der Temperatur T₂₁ durch einen ersten Gegenstromrekuperator 374 gefördert, wobei die Temperatur auf T₂₂ steigt. Das Kalium 1 gelangt mit der für den Feststoffelektrolyten 116 geeigneten Betriebstemperatur T₂₂ in die Vorrichtung 310. In der Vorrichtung 310 reagiert das Kalium mit Sauerstoff in einer exothermen Reaktion zu Kaliumoxid 5, wobei die Temperatur der Flüssigkeit weiter auf eine Temperatur T₂₃ ansteigt.

Das Gemisch aus Kalium 1 und Kaliumoxid 5 verlässt die Vorrichtung 310 und durchströmt den ersten Gegenstromrekuperator 374, wobei die Temperatur auf T₂₄ fällt. Das Gemisch durchläuft einen zweiten Gegenstromrekuperator 383 und wird dabei auf eine für eine nachfolgende Thermolyse geeignete Temperatur T₂₅ vorgewärmt. An einem Drosselventil 370 fällt der Druck des Gemischs auf P₂₁ ab, wodurch bereits einige Kaliumoxidmoleküle in ihre Elemente zerfallen können.

Der Druck P₂₁ wird für die jetzt einsetzende Thermolyse günstig gewählt. Mit dem Druck P₂₁ gelangt das Kalium-Kaliumoxidgemisch in die Heizeinrichtung 389. In der Heizeinrichtung 389, welche ebenso wie die Heizeinrichtung 189 in Fig. 3 ausgebildet sein und variiert werden kann, zerfällt Kaliumoxid unter Zufuhr von thermischer Energie, beispielsweise aus konzentrierter Sonnenstrahlung, zu Kalium und Sauerstoff. Das Gemisch verlässt die Heizeinrichtung 389 mit einer Temperatur T₂₆, welche vorzugsweise etwas über dem Niveau der Temperatur T₂₅ liegen sollte, und gelangt dann in einen Abscheider 390. In dem Abscheider 390 wird der Sauerstoff 6 von dem Kalium getrennt und aus dem System 311 über ein geöffnetes Sauerstoff-Ausgangsventil 391 abgeführt.

Das regenerierte Kalium durchläuft den zweiten Gegenstromrekuperator 383 und gibt dort Wärme ab, wobei die Temperatur auf eine Temperatur T₂₇ abfällt, und gelangt dann in einen Vorratstank 380. Über den Vorratstank 380 fließt das Kalium über die Arbeitsstoffpumpe 382 wieder zurück in den beschriebenen Kreislauf.

Für den Fall, dass Wasserstoff 3 produziert werden soll, während die für die Thermolyse verwendete Heizeinrichtung 389 gleichzeitig deaktiviert ist, wird das Sauerstoff-Ausgangsventil 391 geschlossen. Die über die chemische Reaktion in der Vorrichtung 310 entstehende Wärme wird über den Vorratstank 380 aus dem System abgeführt.

Wird der Vorratstank 380 im Vergleich zu der Vorrichtung 310 entsprechend groß dimensioniert, kann die Vorrichtung 310 im Dauerbetrieb laufen und permanent Wasserstoff 3 produzieren, während die Kaliumregeneration mittels Thermolyse in der Heizeinrichtung 389 temporär stattfindet und nur dann durchgeführt wird, wenn gerade Wärmeenergie zur Verfügung steht, beispielsweise durch konzentrierte Sonnenstrahlung.

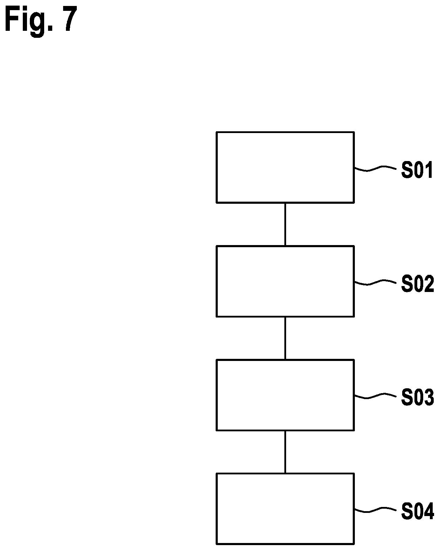

Fig. 7 zeigt ein schematisches Flussdiagramm zum Erläutern eines Verfahrens zum Gewinnen von Wasserstoff 3 aus Wasser 2 unter Verwendung eines Arbeitsstoffs 1 gemäß einer weiteren Ausführungsform der vorliegenden Erfindung.

Das Verfahren gemäß Fig. 7 kann zur Verwendung in allen vorstehend beschriebenen Ausführungsformen der erfindungsgemäßen Systeme und Vorrichtungen angepasst und deren Weiterbildungen und Varianten entsprechend angepasst werden.

In einem Schritt S01 wird ein flüssiger oxidierbarer Arbeitsstoff 1 in eine erste Kammer 12; 112; 212 eingeleitet. In einem Schritt S02 wird Wasser 2; 2' in eine zweite Kammer 14; 114; 314 eingeleitet, wobei die erste Kammer 12; 112; 212; von der zweiten Kammer 14; 114; 314 durch eine Trennungseinrichtung 16; 116 getrennt ist, welche für Sauerstoffionen 7 durchlässig und für Wasser 2 undurchlässig ist.

Der Arbeitsstoff 1 wird derart gewählt und/oder das Wasser 2; 2' und/oder der Arbeitsstoff 1 wird bzw. werden derart in die erste Kammer 12; 112; 212 eingeleitet und/oder Parameter der ersten Kammer 12; 112; 212, etwa Druck und/oder Temperatur in der ersten Kammer 12; 112; 212, und/oder Parameter der zweiten Kammer 14; 114; 314, etwa Druck und/oder Temperatur in der zweiten Kammer 14; 114; 314, derart eingestellt werden, dass
a) das Wasser 2; 2' in der zweiten Kammer 14; 114; 314 zumindest teilweise in Wasserstoff 3 und Sauerstoff aufgespalten wird;
b) der Sauerstoff durch, an eine in oder an der zweiten Kammer 14; 114; 314 ausgebildete, zweite Elektrodeneinrichtung 20; 120; 320 geleitete, Elektronen zumindest teilweise zu Sauerstoffionen 7 ionisiert wird;
c) der Arbeitsstoff 1 in der ersten Kammer 12; 112; 212 zumindest teilweise, durch die Sauerstoffionen 7, welche aus der Trennungseinrichtung 16; 116 in die erste Kammer 12; 112; 212 gelangen, oxidiert wird; wobei bei dem Oxidieren des Arbeitsstoffs 1 Elektronen abgegeben werden, welche über den Arbeitsstoff 1 und über eine erste Elektrodeneinrichtung 18; 118; 218 an die zweite Elektrodeneinrichtung 20; 120; 320 geleitet werden.

In einem Schritt S03 wird der Wasserstoff 3 aus der zweiten Kammer 14; 114; 214 ausgeleitet. In einem optionalen Schritt S04 wird der oxidierte Arbeitsstoff 5 zum zumindest teilweisen Umwandeln des oxidierten Arbeitsstoffs 5 in den unoxidierten Arbeitsstoff 1 erhitzt, insbesondere unter Verwendung von konzentrierter Sonnenstrahlung. Alternativ ist auch ein Erhitzen unter Verwendung von konventionellen Wärmequellen wie durch Verbrennung fossiler Kraftstoffe etc. möglich.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise können die Vorrichtungen 110 und/oder 310 auch dazu verwendet werden, den oxidierten Arbeitsstoff 5, etwa Kaliumoxid, zu dem nicht-oxidierten Arbeitsstoff 1, etwa Kalium, elektrisch zu regenerieren. Hierzu wird z.B. eine elektrische Spannung zwischen der ersten und der zweiten elektrischen Leitung 144, 146 angelegt, welche groß genug ist, um den oxidierten Arbeitsstoff 5 zu dem nicht-oxidierten Arbeitsstoff 1 und Sauerstoff 6 zu zersetzen. Bei der Zersetzung kann der Sauerstoff ionisiert und über den Feststoffelektrolyten 116 und den Wasserstoff-Auslass 128 abgeführt werden. Ein solches elektrisches Regenerieren kann als Teil des erfindungsgemäßen Verfahrens durchgeführt werden.

Obgleich die erste Elektrodeneinrichtung 18; 118; 218 vorzugsweise als in der ersten Kammer 12; 112; 212 angeordnet und die zweite Elektrodeneinrichtung 20; 120; 320 als vorzugsweise in der zweiten Kammer 14; 114; 314 angeordnet beschrieben ist, kann die erste und/oder die zweite Elektrodeneinrichtung 18; 118; 218, 20; 120; 320 auch außerhalb des Gehäuses 142; 242; 342 angeordnet werden, insbesondere die erste Elektrodeneinrichtung innerhalb des Arbeitsstoffkreislauf und/oder die zweite Elektrodeneinrichtung innerhalb des Wasserkreislaufs der Vorrichtung oder des Systems.

## Patentansprüche

1. Vorrichtung (110; 210; 310) zum Gewinnen von Wasserstoff (3) aus Wasser (2; 2') unter Verwendung eines Arbeitsstoffs (1) mit:
einer ersten Kammer (112; 212), in welche ein flüssiger oxidierbarer Arbeitsstoff (1) einleitbar ist;
einem Arbeitsstoff-Auslass (149), mittels welchem der Arbeitsstoff (1) aus der ersten Kammer (112) ableitbar ist;
wobei der Arbeitsstoff (1) ein oxidierbares Metall oder eine Legierung oxidierbarer Metalle ist und für Elektronen leitfähig ist;
einer zweiten Kammer (114; 314), in welche Wasser (2; 2') einleitbar ist, welches in der zweiten Kammer (114; 314) in Wasserstoff (3) und Sauerstoff spaltbar ist;
einer Trennungseinrichtung (116), welche dazu ausgebildet und angeordnet ist, die erste Kammer (112; 212) von der zweiten Kammer (114; 314) zu trennen;
wobei die Trennungseinrichtung (116) für Sauerstoffionen (7) durchlässig und für Wasser (2; 2') undurchlässig ist;
einer ersten Elektrodeneinrichtung (118; 218);
einer zweiten Elektrodeneinrichtung (120; 320);
wobei die erste Elektrodeneinrichtung (118; 218) zum Leiten der abgegebenen Elektronen aus dem Arbeitsstoff (1) an die zweite Elektrodeneinrichtung (120; 320) mit dem in die erste Kammer (112; 212) eingeleiteten Arbeitsstoff (1) elektrisch leitend verbindbar ist, sodass der Arbeitsstoff (1) in der ersten Kammer (112; 212) als flüssige Elektrode fungiert;
wobei mittels der zweiten Elektrodeneinrichtung (120; 320) mit den an die zweite Elektrodeneinrichtung (120; 320) geleiteten Elektronen Sauerstoff zu den Sauerstoffionen (7) ionisierbar ist; sodass der Arbeitsstoff (1) in der ersten Kammer (112; 212) durch die Sauerstoffionen (7) unter Abgabe von Elektronen zumindest teilweise oxidierbar ist, wodurch ein oxidierter Arbeitsstoff (5) entsteht; und
mit einer Ausleiteinrichtung (121, 122, 128; 128), mittels welcher der Wasserstoff (3) aus der zweiten Kammer (114; 214; 314) ausleitbar ist.

2. Vorrichtung nach Anspruch 1,
wobei die zweite Elektrodeneinrichtung (120; 220; 320) als für Sauerstoff durchlässige Schicht zwischen der zweiten Kammer (114; 214; 314) und der Trennungseinrichtung (116; 216; 316) ausgebildet ist.

3. Vorrichtung nach Anspruch 1 oder 2,
wobei die erste Elektrodeneinrichtung (218) als eine für den Arbeitsstoff (1) in flüssigem Zustand passierbare Elektrode ausgebildet ist.

4. Vorrichtung nach einem der Ansprüche 1 bis 3,
wobei die erste Kammer (112; 212; 312) ganz oder teilweise zwischen der Trennungseinrichtung (116; 216; 316) und der ersten Elektrodeneinrichtung (118; 218; 318) angeordnet ist.

5. Vorrichtung nach einem der Ansprüche 1 bis 4,
wobei die Trennungseinrichtung (114; 214; 314) aus einem Feststoffelektrolyten besteht oder einen Feststoffelektrolyten aufweist.

6. Vorrichtung nach einem der Ansprüche 1 bis 5,
mit einer ersten Membran (222), welche zumindest als Teil einer Außenseite der ersten Kammer (112; 212; 312) ausgebildet ist und welche für Sauerstoffmoleküle (6) durchlässig und für Moleküle des Arbeitsstoffs (1) undurchlässig ist.

7. Vorrichtung nach einem der Ansprüche 1 bis 6,
mit einer zweiten Membran (222), welche zumindest als Teil einer Außenseite der zweiten Kammer (114; 214; 314) ausgebildet ist und welche für Wasserstoffmoleküle (3) durchlässig und für Wasser (2; 2') undurchlässig ist.

8. Vorrichtung nach einem der Ansprüche 1 bis 7, mit:
einer Spannungsquelle (147), mittels welcher eine elektrische Potenzialdifferenz zwischen der ersten Elektrodeneinrichtung (118; 218; 318) und der zweiten Elektrodeneinrichtung (120; 220; 320) einstellbar ist.

9. System (111) zum Gewinnen von Wasserstoff (3) aus Wasser (2; 2') mit:
einer Vorrichtung (110; 210; 310) nach einem der Ansprüche 1 - 8; und
einem Arbeitsstoff-Kreislauf, mittels welchem der oxidierte Arbeitsstoff (5) zumindest zum Teil wieder in den unoxidierten Arbeitsstoff (1) umwandelbar ist.

10. System (111) nach Anspruch 9 mit:
einer Verdampfungseinrichtung (170), mittels welcher durch eine in dem Arbeitsstoff (1) enthaltene Wärme flüssiges Wasser (2) zu Wasserdampf (2') verdampfbar ist.

11. System (111) nach Anspruch 9 oder 10, mit:
einem Gegenstromrekuperator (174), mittels welchem Wasserdampf (2') durch eine in dem Arbeitsstoff (1) enthaltene Wärme überhitzbar ist.

12. System (111) nach einem der Ansprüche 9 bis 11, mit:
einer Heizeinrichtung (189), mittels welcher der Arbeitsstoff (1) durch konzentrierte Sonnenstrahlen erhitzbar ist.

13. Verfahren zum Gewinnen von Wasserstoff (3) aus Wasser (2; 2'), mit den Schritten:
Einleiten (S01) eines flüssigen oxidierbaren Arbeitsstoffs (1) in eine erste Kammer (112; 212);
wobei der Arbeitsstoff (1) ein oxidierbares Metall oder eine Legierung oxidierbarer Metalle ist und für Elektronen leitfähig ist;
Einleiten (S02) von Wasser (2; 2') in eine zweite Kammer (114; 314); wobei die erste Kammer (112; 212) von der zweiten Kammer (114; 314) durch eine Trennungseinrichtung (116) getrennt ist, welche für Sauerstoffionen (7) durchlässig und für Wasser (2) undurchlässig ist;
wobei der Arbeitsstoff (1) derart gewählt wird und/oder das Wasser (2; 2') derart in die erste Kammer (112; 212) eingeleitet wird und/oder Parameter der ersten Kammer (112; 212) und/oder Parameter der zweiten Kammer (114; 314) derart eingestellt werden, dass
a) das Wasser (2; 2') in der zweiten Kammer (114; 314) zumindest teilweise in Wasserstoff (3) und Sauerstoff aufgespalten wird;
b) der Sauerstoff durch an eine zweite Elektrodeneinrichtung (120; 220; 320) geleitete Elektronen zumindest teilweise zu Sauerstoffionen (7) ionisiert wird;
c) der Arbeitsstoff (1) in der ersten Kammer (112; 212), zumindest teilweise, durch die Sauerstoffionen (7), welche aus der Trennungseinrichtung (116) in die erste Kammer (112; 312) gelangen, oxidiert wird; wobei bei dem Oxidieren des Arbeitsstoffs (1) Elektronen abgegeben werden, welche über den Arbeitsstoff (1) und über eine erste Elektrodeneinrichtung (118; 318) an die zweite Elektrodeneinrichtung (120; 220) geleitet werden;
Ausleiten (S03) des Wasserstoffs (3) aus der zweiten Kammer (114; 214); und Ableiten des Arbeitsstoffs (1) aus der ersten Kammer (112).

14. Verfahren nach Anspruch 13, mit dem Schritt:
Erhitzen (S04) des oxidierten Arbeitsstoffs (5) zum zumindest teilweisen Umwandeln des oxidierten Arbeitsstoffs (5) in den unoxidierten Arbeitsstoff (1).

15. Verfahren nach Anspruch 13 oder 14,
wobei als Arbeitsstoff (1) ein Alkalimetall, ein Erdalkalimetall oder Quecksilber verwendet wird.

## Claims

1. Device (110; 210; 310) for recovering hydrogen (3) from water (2; 2') using a working substance (1), with:
a first chamber (112; 212), into which a liquid, oxidizable working substance (1) can be introduced;
a working substance outlet (149), by means of which the working substance (1) can be let out from the first chamber (112);
wherein the working substance (1) is an oxidizable metal or an alloy of oxidizable metals and is conductive for electrons;
a second chamber (114; 314), into which water (2; 2') can be introduced, the water being able to split into hydrogen (3) and oxygen in the second chamber (114; 314);
a separating unit (116), which is designed and arranged to separate the first chamber (112; 212) from the second chamber (114; 314); wherein the separating unit (116) is permeable to oxygen ions (7) and impermeable to water (2; 2');
a first electrode unit (118; 218);
a second electrode unit (120; 320);
wherein, for conducting the electrons given off out of the working substance (1) to the second electrode unit (120; 320), the first electrode unit (118; 218) can be connected in an electrically conducting manner to the working substance (1) introduced into the first chamber (112; 212), so that the working substance (1) in the first chamber (112; 212) acts as a liquid electrode;
wherein, by means of the second electrode unit (120; 320), oxygen can be ionized into the oxygen ions (7) by the electrons conducted to the second electrode unit (120; 320); so that the working substance (1) in the first chamber (112; 212) can be at least partially oxidized by the oxygen ions (7) while giving off electrons, whereby an oxidized working substance (5) is created; and
with a letting-out unit (121, 122, 128; 128), by means of which the hydrogen (3) can be let out of the second chamber (114; 214; 314).

2. Device according to Claim 1,
wherein the second electrode unit (120; 220; 320) is designed as a layer permeable to oxygen between the second chamber (114; 214; 314) and the separating unit (116; 216; 316).

3. Device according to Claim 1 or 2,
wherein the first electrode unit (218) is designed as an electrode through which the working substance (1) can pass in the liquid state.

4. Device according to one of Claims 1 to 3,
wherein the first chamber (112; 212; 312) is entirely or partially arranged between the separating unit (116; 216; 316) and the first electrode unit (118; 218; 318).

5. Device according to one of Claims 1 to 4,
wherein the separating unit (114; 214; 314) consists of a solid electrolyte or comprises a solid electrolyte.

6. Device according to one of Claims 1 to 5,
with a first membrane (222), which is designed at least as part of an outer side of the first chamber (112; 212; 312) and which is permeable to oxygen molecules (6) and impermeable to molecules of the working substance (1).

7. Device according to one of Claims 1 to 6,
with a second membrane (222), which is designed at least as part of an outer side of the second chamber (114; 214; 314) and which is permeable to hydrogen molecules (3) and impermeable to water (2; 2').

8. Device according to one of Claims 1 to 7, with:
a voltage source (147), by means of which an electrical potential difference between the first electrode unit (118; 218; 318) and the second electrode unit (120; 220; 320) can be set.

9. System (111) for recovering hydrogen (3) from water (2; 2'), with:
a device (110; 210; 310) according to one of Claims 1-8; and
a working-substance circuit, by means of which the oxidized working substance (5) can be at least partly converted back into the unoxidized working substance (1).

10. System (111) according to Claim 9, with:
an evaporating unit (170), by means of which liquid water (2) can be evaporated into water vapour (2') by a heat contained in the working substance (1).

11. System (111) according to Claim 9 or 10, with:
a counterflow recuperator (174), by means of which water vapour (2') can be superheated by a heat contained in the working substance (1).

12. System (111) according to one of Claims 9 to 11, with:
a heating unit (189), by means of which the working substance (1) can be heated by concentrated sunrays.

13. Method for recovering hydrogen (3) from water (2; 2'), with the steps of:
introducing (S01) a liquid, oxidizable working substance (1) into a first chamber (112; 212);
wherein the working substance (1) is an oxidizable metal or an alloy of oxidizable metals and is conductive for electrons;
introducing (S02) water (2; 2') into a second chamber (114; 314); wherein the first chamber (112; 212) is separated from the second chamber (114; 314) by a separating unit (116), which is permeable to oxygen ions (7) and impermeable to water (2);
wherein the working substance (1) is chosen such that and/or the water (2; 2') is introduced into the first chamber (112; 212) such that and/or parameters of the first chamber (112; 212) and/or parameters of the second chamber (114; 314) are set such that
a) the water (2; 2') in the second chamber (114; 314) is at least partially split into hydrogen (3) and oxygen;
b) the oxygen is at least partially ionized into oxygen ions (7) by electrons conducted to a second electrode unit (120; 220; 320);
c) the working substance (1) in the first chamber (112; 212) is at least partially oxidized by the oxygen ions (7) which entered the first chamber (112; 312) from the separating unit (116); wherein, during the oxidizing of the working substance (1), electrons are given off, being conducted to the second electrode unit (120; 220) by way of the working substance (1) and by way of a first electrode unit (118; 318);
letting out (S03) the hydrogen (3) from the second chamber (114; 214); and discharging the working substance (1) from the first chamber (112).

14. Method according to Claim 13, with the step of: heating (S04) the oxidized working substance (5) for the at least partial conversion of the oxidized working substance (5) into the unoxidized working substance (1).

15. Method according to Claim 13 or 14,
wherein an alkali metal, an alkaline earth metal or mercury is used as the working substance (1).

## Revendications

1. Dispositif (110; 210 ; 310) destiné à la production d'hydrogène (3) à partir d'eau (2 ; 2') en utilisant un agent (1), avec :
une première chambre (112 ; 212), dans laquelle peut être introduit un agent (1) oxydable liquide ;
une sortie d'agent (149) au moyen de laquelle l'agent (1) peut être évacué de la première chambre (112) ;
l'agent (1) étant un métal oxydable ou un alliage de métaux oxydables et pouvant conduire des électrons ;
une deuxième chambre (114 ; 314) dans laquelle peut être introduite de l'eau (2 ; 2') qui, dans la deuxième chambre (114 ; 314), peut être dissociée en hydrogène (3) et en oxygène ;
un équipement de séparation (116) qui est constitué et disposé pour séparer la première chambre (112 ; 212) de la deuxième chambre (114 ; 314) ; l'équipement de séparation (116) étant perméable aux ions oxygène (7) et imperméable à l'eau (2 ; 2') ;
un premier équipement d'électrodes (118 ; 218) ;
un deuxième équipement d'électrodes (120 ; 320) ;
le premier équipement d'électrodes (118 ; 218) pouvant, pour la conduite des électrons délivrés à partir de l'agent (1) vers le deuxième équipement d'électrodes (120 ; 320), être raccordé de façon électriquement conductrice à l'agent (1) introduit dans la première chambre (112 ; 212) de telle sorte que l'agent (1) dans la première chambre (112 ; 212) fonctionne en tant qu'électrode liquide ;
de l'oxygène pouvant être ionisé en ions oxygène (7) au moyen du deuxième équipement d'électrodes (120 ; 320) avec les électrons conduits vers le deuxième équipement d'électrodes (120 ; 320) ; de telle sorte que l'agent (1) peut dans la première chambre (112 ; 212) être oxydé au moins partiellement par les ions oxygène (7) en délivrant des électrons, ce qui produit un agent oxydé (5) ; et
avec un équipement d'extraction (121, 122, 128 ; 128) au moyen duquel l'oxygène (3) peut être extrait de la deuxième chambre (114 ; 214 ; 314).

2. Dispositif selon la revendication 1,
le deuxième équipement d'électrodes (120 ; 220 ; 320) étant constitué en tant que couche perméable à l'oxygène entre la deuxième chambre (114 ; 214 ; 314) et l'équipement de séparation (116 ; 216 ; 316).

3. Dispositif selon la revendication 1 ou 2,
le premier équipement d'électrodes (218) étant constitué en tant qu'électrode pouvant être franchie par l'agent (1) à l'état liquide.

4. Dispositif selon l'une des revendications 1 à 3, la première chambre (112 ; 212 ; 312) étant disposée totalement ou partiellement entre l'équipement de séparation (116 ; 216 ; 316) et le premier équipement d'électrodes (118 ; 218 ; 318).

5. Dispositif selon l'une des revendications 1 à 4, l'équipement de séparation (114 ; 214 ; 314) se composant d'un électrolyte solide ou présentant un électrolyte solide.

6. Dispositif selon l'une des revendications 1 à 5, avec une première membrane (222) qui est constituée au moins en tant que partie d'un côté extérieur de la première chambre (112 ; 212 ; 312) et qui est perméable aux molécules d'oxygène (6) et imperméable aux molécules de l'agent (1).

7. Dispositif selon l'une des revendications 1 à 6, avec une deuxième membrane (222) qui est constituée au moins en tant que partie d'un côté extérieur de la deuxième chambre (114 ; 214 ; 314) et qui est perméable aux molécules d'hydrogène (3) et imperméable à l'eau (2 ; 2').

8. Dispositif selon l'une des revendications 1 à 7, avec :
une source de tension (147) au moyen de laquelle une différence de potentiel électrique peut être réglée entre le premier équipement d'électrodes (118 ; 218 ; 318) et le deuxième équipement d'électrodes (120 ; 220 ; 320).

9. Système (111) destiné à la production d'hydrogène (3) à partir d'eau (2 ; 2'), avec :
un dispositif (110 ; 210 ; 310) selon l'une des revendications 1 - 8 ; et
un circuit d'agent au moyen duquel l'agent (5) oxydé peut au moins partiellement être retransformé en agent (1) non oxydé.

10. Système (111) selon la revendication 9, avec :
un équipement d'évaporation (170) au moyen duquel de l'eau liquide (2) peut être évaporée en vapeur d'eau (2') par une chaleur contenue dans l'agent (1).

11. Système (111) selon la revendication 9 ou 10, avec :
un récupérateur à contre-courant (174) au moyen duquel de la vapeur d'eau (2') peut être surchauffée par une chaleur contenue dans l'agent (1).

12. Système (111) selon l'une des revendications 9 à 11, avec :
un équipement de chauffage (189) au moyen duquel l'agent (1) peut être chauffé par des rayons solaires concentrés.

13. Procédé destiné à la production d'hydrogène (3) à partir d'eau (2 ; 2'), avec les étapes suivantes :
introduction (S01) d'un agent (1) oxydable liquide dans une première chambre (112 ; 212) ;
l'agent (1) étant un métal oxydable ou un alliage de métaux oxydables, et pouvant conduire des électrons ;
introduction (S02) d'eau (2 ; 2') dans une deuxième chambre (114 ; 314) ; la première chambre (112 ; 212) étant séparée de la deuxième chambre (114 ; 314) par un équipement de séparation (116) qui est perméable aux ions oxygène (7) et imperméable à l'eau (2) ;
l'agent (1) étant choisi et/ou l'eau (2 ; 2') étant introduite dans la première chambre (112 ; 212) et/ou des paramètres de la première chambre (112 ; 212) et/ou des paramètres de la deuxième chambre (114 ; 314) étant réglés de telle sorte que
a) l'eau (2 ; 2') dans la deuxième chambre (114 ; 314) est au moins partiellement fractionnée en hydrogène (3) et en oxygène ;
b) l'oxygène est ionisé au moins partiellement en ions oxygène (7) par des électrons conduits à un deuxième équipement d'électrodes (120 ; 220 ; 320) ;
c) l'agent (1) dans la première chambre (112 ; 212) est oxydé au moins partiellement par les ions oxygène (7) qui arrivent dans la première chambre (112 ; 312) en provenance de l'équipement de séparation (116) ; des électrons étant délivrés lors de l'oxydation de l'agent (1), lesquels sont conduits au deuxième équipement d'électrodes (120 ; 220) via l'agent (1) et via un premier équipement d'électrodes (118 ; 318) ;
extraction (S03) de l'oxygène (3) à partir de la deuxième chambre (114 ; 314) ; et évacuation de l'agent (1) à partir de la première chambre (112).

14. Procédé selon la revendication 13, avec l'étape suivants :
chauffage (S04) de l'agent oxydé (5) pour la transformation au moins partielle de l'agent oxydé (5) en agent (1) non oxydé.

15. Procédé selon la revendication 13 ou 14,
un métal alcalin, un métal alcalino-terreux ou du mercure étant utilisé en tant qu'agent (1).
